(19) Europäisches Patentamt
European Patent Office
Office européen des brevets

(11) **EP 1 912 060 A1**

(12) **EUROPEAN PATENT APPLICATION**
published in accordance with Art. 153(4) EPC

(43) Date of publication:
**16.04.2008 Bulletin 2008/16**

(21) Application number: **06781781.7**

(22) Date of filing: **27.07.2006**

(51) Int Cl.:
***G01N 21/64*** (2006.01)      ***G01N 21/76*** (2006.01)

(86) International application number:
**PCT/JP2006/314870**

(87) International publication number:
**WO 2007/013551 (01.02.2007 Gazette 2007/05)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.07.2005 JP 2005220358**

(71) Applicant: **Olympus Corporation Tokyo 151-0072 (JP)**

(72) Inventors:
• **OKAWA, Kaneyasu 2200201 (JP)**
• **SAIDA, Yuko 3100851 (JP)**
• **SHIBAZAKI, Takami 1930832 (JP)**

(74) Representative: **von Hellfeld, Axel Wuesthoff & Wuesthoff Patent- und Rechtsanwälte Schweigerstrasse 2 D-81541 München (DE)**

(54) **LIGHT INTENSITY MEASURING METHOD AND LIGHT INTENSITY MEASURING DEVICE**

(57) A light intensity measurement method of acquiring an image of a subject for detection, in which a plurality of target areas to be detected, each having a predetermined area, are arranged, and of measuring light intensity of each target area by analyzing the acquired image. The method includes extracting each area, which is smaller than the predetermined area, as a noise area, from among areas extracted from the acquired image based on light intensity thereof; and removing the noise area from the image. A light intensity measurement system has a light emitting device for emitting light to the subject; an image acquiring device for acquiring an image of the subject to which the light is emitted; a storage device for storing the acquired image; an extracting device for extracting each area, which has an area smaller than the predetermined area, as a noise area from the stored image; and an image processing device for removing the noise area from the stored image.

FIG. 1

**Description**

TECHNICAL FIELD

The present invention is a light intensity measurement method and a light intensity measurement system for obtaining a highly reliable result of analysis when performing a biochemical reaction on a solid-phase carrier, to which a probe molecule for detecting a biogenic substance or the like is attached, and measuring the reaction state as the light intensity of fluorescence or the like.

Priority is claimed on Japanese Patent Application No. 2005-220358, filed July 29, 2005, the content of which is incorporated herein by reference.

BACKGROUND ART

A known method of detecting a biogenic substance or the like uses a microarray having a plurality of areas (called "spots" below) in which a plurality of probe molecules are attached to a solid-phase carrier. For example, in order to measure a variation in the amount of nucleic acid which appears in a cell, (i) nucleic acid is extracted from the target cells, (ii) the extracted nucleic acid is marked using a fluorescent material, and then made to react with probe molecules, which are made of oligodeoxynucleotide, and are attached to a microarray, (iii) an image of the microarray is acquired by irradiating it with light, which can excite the fluorescent material, and (iv) light intensity data, which form the image, is analyzed so as to measure the fluorescence intensity of each spot. The ratio between the amounts of appearance of nucleic acid between samples to be compared with each other can be computed by comparing the relevant fluorescence intensities with each other. Accordingly, it is possible to determine the state of appearance of a gene, presence or absence of a specific gene on a genome, or presence or absence of a mutation in a gene (see Patent Document 1, and Patent Document 2).

Therefore, in order to detect a biogenic substance or the like with high accuracy, highly accurate detection of the light intensity of each spot is an important factor.

However, in the case of using a fluorescent material so as to mark extracted nucleic acid, if there is a foreign body which reflects excited light, or emits fluorescence, then not only the spot images but also noise images due to detection of light emitted from such a foreign body are included in the microarray image, which causes errors in the light-intensity measurement values of the spots.

In addition, if there is an object for blocking light on a spot, then light from the spot cannot reach the optical detector, which also causes an error in the light intensity value of the spot (such a noise image is called a "noise area" below).

Although the Patent Documents 1 and 2 each disclose an invention of a system for detecting each spot, both disclose only the analysis of the light intensity of the spot, and do not consider the influence of measurement errors due to other noise areas. Therefore, these methods do not always lead to detection with high accuracy.

On the other hand, an invention in consideration of the above-described influence of measurement errors due to the noise areas has been disclosed (see Patent Document 3). In this invention, noise areas are detected using light, which has a wavelength different from that of the light for exciting a fluorescent material to be measured, thereby removing the noise areas from the acquired image.

Patent Document 1: Japanese Unexamined Patent Application, First Publication No. 2000-121559
Patent Document 2: Japanese Unexamined Patent Application, First Publication No. 2002-181709
Patent Document 3: Japanese Unexamined Patent Application, First Publication No. 2002-257730

However, with respect to the invention disclosed by Patent Document 3, although the influence of the noise areas on measurement accuracy, which have been detected using light having a wavelength different from that of the light for exciting a fluorescent material to be measured, can be removed, all noise areas on the microarray cannot always be detected, and thus there is no guarantee to provide desired measurement accuracy.

DISCLOSURE OF INVENTION

In light of the above circumstances, an object of the present invention is to provide a light intensity measurement method and a light intensity measurement system, which are used for detection of a biogenic substance or the like by using a microarray, and by which noise areas can be detected so as to highly accurately analyze the microarray, and target spots can be isolated from the noise areas with high accuracy, in accordance with the size or light intensity of each noise area.

Therefore, the present invention provides a light intensity measurement method of acquiring an image of a subject for detection, in which a plurality of target areas to be detected, each having a predetermined area, are arranged, and of measuring light intensity of each target area by analyzing the acquired image, wherein the method comprises the steps of:

extracting each area, which is smaller than the predetermined area, as a noise area, from among areas extracted from the acquired image based on light intensity thereof; and
removing the noise area from the image.

Preferably, the target areas include a chemiluminescent material or a fluorescent material.
In a typical example, a plurality of images of the subject are acquired, and for each acquired image, each area, which is smaller than the predetermined area, is extracted as a noise area, and the noise area is removed.
In this case, a binary image may be formed based on the acquired image, and the noise area is extracted from the binary image.
Typically:

(i) in the binary image, among areas which are smaller than the predetermined area, each area which has a light intensity higher than that of the surroundings thereof is determined as the noise area; or
(ii) in the binary image, among areas which are smaller than the predetermined area, each area which has a light intensity lower than that of the surroundings thereof is determined as the noise area.

Preferably, the noise area is extracted using one selected image among the plurality of images.
In a typical example, the noise area has an area of 50% or smaller of the predetermined area, and the noise-area extraction is performed in such a manner that the number of the noise areas is smaller than 1000.
The noise area may be expanded or contracted by a specific amount, and then removed.
It is possible that after the expansion, the light intensity of the noise area is substituted with a light intensity equivalent to the median of light intensity of outside pixels adjacent to the noise area.
In a typical example, for each partial area which includes each target area in the acquired image, each area which is smaller than the predetermined area is extracted as a noise area, and is removed.
Preferably, a binary image is formed for each partial area which includes each target area in the acquired image, and the noise area is extracted using the binary image.
In this case, among areas in the binary image, which are smaller than the predetermined area, each area having a light intensity higher than that of the surroundings may be determined as the noise area.
In addition, a plurality of images of the subject may be acquired, and the image used for extracting the noise area may be selected from among the plurality of the images.
It is possible that the image used for extracting the noise area is an image which has a maximum light intensity higher than a value obtained by multiplying 2 by 2 a number of times which is obtained by subtracting 2 from the number of bits with respect to AD conversion of the optical detector.
In a typical example, the noise area has an area smaller than or equal to a value obtained by multiplying the predetermined area by 0.2.
Additionally, the noise area may be expanded by a specific amount, and then removed.
In this case, after the expansion, the median of light intensities of outside pixels adjacent to the expanded area may be computed.
In a preferable example of this case, a binary image is formed for each partial area which includes each target area in the acquired image; and
the noise area satisfies a condition that a difference between a threshold of light intensity used for forming the binary image and the median of the light intensities of the outside pixels is larger than a value obtained by doubling a standard deviation with respect to pixel noise of the optical detector used for acquiring the image.
It is possible that the noise area is removed by subtracting a value from the light intensity of the noise area, where the value is obtained by doubling a standard deviation with respect to pixel noise of the optical detector used for acquiring the image.
In a typical example, in each partial area, each area which is smaller than the predetermined area is extracted as the noise area based on a predetermined threshold with respect to light intensity.
In this case, the noise extraction for each partial area based on the predetermined threshold with respect to light intensity may be repeated a plurality of times while varying the threshold for each partial area.
In a preferable example, a plurality of images of the subject are acquired, and for each acquired image, each area, which is smaller than the predetermined area, is extracted as a noise area, and the noise area is removed; and for each partial area which includes each target area in each image from which the noise area has been removed, each area which is smaller than the predetermined area is extracted as a noise area based on a predetermined threshold with respect to light intensity, and the noise area is removed.

In this case, the noise extraction for each partial area based on the predetermined threshold with respect to light intensity may be repeated a plurality of times while varying the threshold for each partial area.

Accordingly, it is possible that noise areas, which can be removed using a single threshold, are removed from the entire image through high-speed processing, and then noise areas are extracted using a threshold set for each partial area so as to repeat noise processing until no noise area is detected. Therefore, high-speed and highly accurate noise-area removal can be performed.

The present invention also provides a light intensity measurement system for measuring light intensity of a subject for detection, in which a plurality of target areas to be detected, each having a predetermined area, are arranged, the system comprising:

a light emitting device for emitting light to the subject;
an image acquiring device for acquiring an image of the subject to which the light is emitted;
a storage device for storing the acquired image;
an extracting device for extracting each area, which has an area smaller than the predetermined area, as a noise area from the stored image; and
an image processing device for removing the noise area from the stored image.

In a typical example, the extracting device extracts the noise area for each stored image; and the image processing device removes the noise area for each stored image.

In another typical example, the extracting device extracts the noise area for each partial area which includes each target area in the stored image; and the image processing device removes the noise area also for each partial area.

In accordance with the present invention, all noise areas in a microarray image can be extracted and removed, thereby obtaining analysis results which are more accurate. In addition, noise removal can be performed automatically by the present invention. When noise removal is performed automatically, it is possible to prevent data of an experiment from varying depending on each operator who executes the experiment, thereby obtaining data having high reproducibility. Also in this case, it is possible to reduce a burden on the operator who performs image processing manually, thereby considerably improving efficiency of the relevant analysis.

BRIEF DESCRIPTION OF THE DRAWINGS

Fig. 1 is a flowchart with respect to a first embodiment in accordance with the present invention.
Fig. 2 is also a flowchart with respect to the first embodiment.
Fig. 3 is a flowchart with respect to a second embodiment in accordance with the present invention.
Fig. 4 is also a flowchart with respect to the second embodiment.
Fig. 5A is a plan view showing an example image of each spot on a microarray, acquired at a specific exposure condition.
Fig. 5B is a plan view showing an example image of each spot on the same microarray, acquired with a longer exposure time in comparison with Fig. 5A.
Fig. 5C is a plan view showing an example image of each spot on the same microarray, acquired with a longer exposure time in comparison with Fig. 5B.
Fig. 5D is a plan view showing an example image including each spot on the same microarray, acquired at an optimum exposure condition for each spot, through Figs. 5A to 5C.
Fig. 6A is a plan view showing an example original image with respect to the present invention.
Fig. 6B is a plan view showing an example binary image formed in accordance with the present invention.
Fig. 7 is a graph showing an example of gray-level profiles with respect to spots on a microarray used in the present invention.
Fig. 8A is a diagram showing an example of the actual body of a black noise.
Fig. 8B is a diagram showing an example acquired image of Fig. 8A, and also showing the principle of the contraction process applied thereto.
Fig. 8C is a diagram showing the principle of the expansion process applied to the example acquired image in Fig. 8A.
Fig. 9 is a diagram showing an example of the structure of a light intensity measurement system in accordance with the present invention.
Fig. 10 is a diagram showing an example rectangular image assigned to a target spot area to be analyzed.

DESCRIPTION OF THE SYMBOLS

> 1: image selection step
> 2: noise removal determination step
> 3: binary image forming step and expansion step
> 4: noise removing step
> 5: collected image forming step
> 10: subject for detection
> 11: light emitting device
> 12: optical system
> 13: optical detector
> 14: storage device
> 15: software resource (extracting device, image processing device)
> 16: CPU
> 17: computer

BEST MODE FOR CARRYING OUT THE INVENTION

Below, the present invention will be explained in detail, however, it is never limited by the following embodiments.

System in embodiments

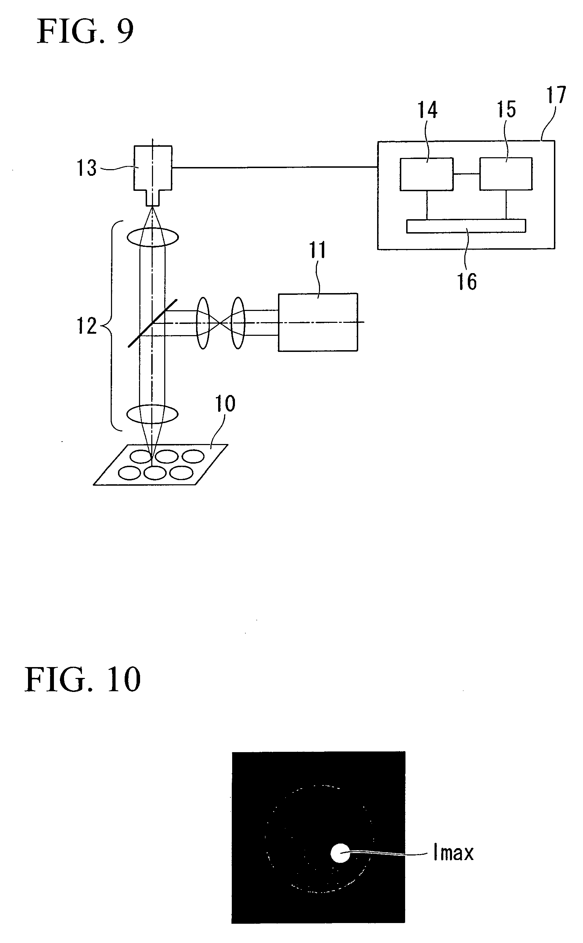

A light intensity measurement system (see Fig. 9) employed in the following embodiments has (i) an arc lamp as a light emitting device (11) for emitting light to a microarray (10), which is a subject for detection, (ii) a CCD camera (13) as an optical detector and an optical system (12) for imaging the subject on the relevant CCD, which function as an image acquiring device for acquiring an image of the subject, (iii) a random access memory, a hard disk, and the like, which function as a storage device (14) for storing the acquired image, (iv) a software resource (15), which functions as the extracting device and the image processing device of the present invention) including an extraction procedure for extracting (or detecting) noise areas from the stored image and an image processing procedure for removing the noise areas from the stored image, (v) a computer (17) which includes a CPU (16: a central processing unit) for executing the relevant software.

Therefore, when using the above light intensity measurement system, a spatial light-intensity distribution of the microarray can be detected using the CCD camera, and an image of the microarray can be acquired as a digital image formed by digital data, which is obtained by subjecting each pixel to analog-digital conversion.

That is, when measuring a light intensity by using the CCD camera, the light intensity is subjected to AD conversion, and is output as a gray level. Therefore, the gray level indicates the light intensity.

Acquisition of image at an optimum exposure condition

Generally, the amount of a biogenic substance included in a living body greatly varies depending on the kind of biogenic substance. For example, when analyzing the amount of appearance of a gene, it is necessary to accurately measure the amounts of presence of the gene in a range from a higher appearing rate to a lower appearing rate.

When measuring the amount of presence of a biogenic substance by using a microarray, converted light intensity is measured by means of a reaction with a plurality of prove molecules, which are attached so as to form spots in different areas on a substrate. Therefore, spots having higher light intensities and spots having lower light intensities (determined in proportion to the amount of presence of the relevant biogenic substance) exist on the same microarray. In addition, generally, the dynamic range with respect to the amount of presence of a biogenic substance is wider than the dynamic range of a CCD. Therefore, it is difficult to acquire an image appropriate to light-intensity measurement (i.e., an image in which the spots having higher light intensities are not saturated so as to detect the spots having lower light intensities) at a constant exposure condition. Therefore, it is necessary to vary the exposure condition, and acquire an image at an optimum exposure condition for each spot. Also when displaying an image of the spots, it is preferable to display an image which is acquired at an optimum exposure condition for each spot.

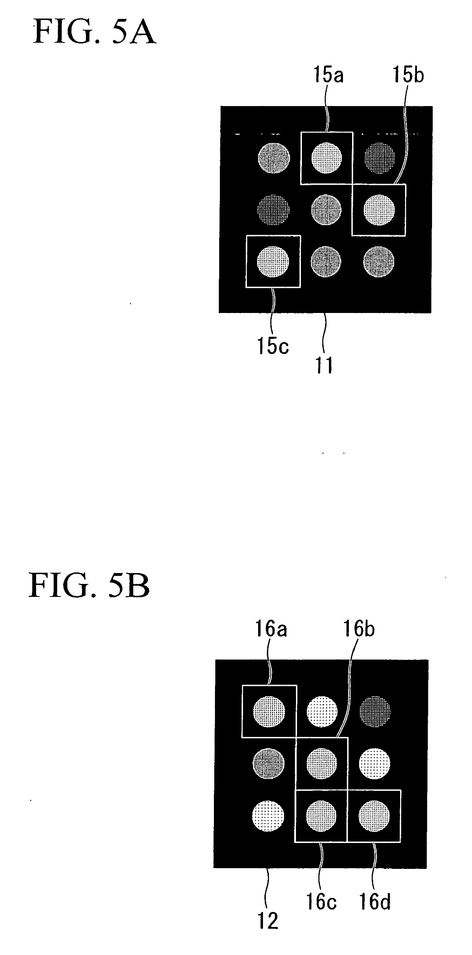

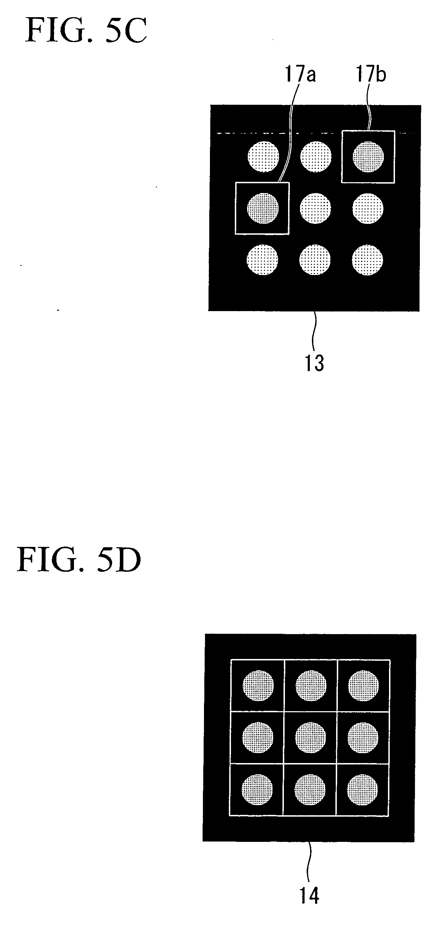

Such a method will be explained with reference to Figs. 5A to 5D, which show example images of a microarray having nine spots.

In a method for acquiring an image in which each of the spots on the microarray is imaged at an optimum exposure condition for the spot, a plurality of images of the microarray may be acquired while successively varying the exposure time, and then an image of each spot, which has been acquired at an optimum exposure condition, may be selected.

For example, a method of acquiring images while successively doubling the exposure time will be explained. Reference numeral 11 indicates an image acquired with an exposure time of 1 sec, reference numeral 12 indicates an image acquired with an exposure time of 2 sec, and reference numeral 13 indicates an image acquired with an exposure time of 4 sec.

The "optimum exposure condition" is a condition at which the CCD is not saturated, and the spot is imaged as brightly as possible. Therefore, in the image 11 having the exposure time of 1 sec, a second spot 15a, a sixth spot 15b, and a seventh spot 15c, each of the three spots being surrounded by a square, are extracted as spots imaged at the optimum exposure condition. Similarly, in the image 12 having the exposure time of 2 sec, four spots, being a first spot 16a, a fifth spot 16b, an eighth spot 16c, and a ninth spot 16d, are extracted as the spots imaged at the optimum exposure condition. Furthermore, in the image 13 having the exposure time of 4 sec, two spots, being a fourth spot 17a and a third spot 17b, are extracted as the spots imaged at the optimum exposure condition.

That is, through the three kinds of exposure conditions, all nine spots on the microarray have been imaged appropriately.

As described above, the exposure state is estimated for each spot through a plurality of images acquired at different exposure conditions assigned thereto, and the light intensity is measured for each spot by using an image acquired at an optimum exposure condition therefor. When displaying an image of the spots, a spot image is extracted from an image selected for the spot, and an image 14 is displayed, which is obtained by collecting the extracted spot images together. Accordingly, although the image 11 having the exposure time of 1 sec includes spots which are too dark to be visible, and the image 13 having the exposure time of 4 sec includes spots which are too bright, all spots on the microarray can be observed at optimum conditions in the formed image 14 which includes the collected spot images.

Therefore, analysis is performed using a plurality of images in which each spot is imaged at an optimum exposure condition.

In addition, a number of spike noises are present on each acquired image, due to electrical noise with respect to the CCD. When there are such noises, noise-area extracting processing requires considerable time. Therefore, prior to noise area removal, it is preferable to perform a smoothing process (for all the acquired images) in which the gray level of a target pixel to be processed is substituted with an average gray level between the eight pixels which surround the target pixel.

Chemiluminescent or fluorescent material

In the light intensity measurement method and the light intensity measurement system of the present invention, intensity of light is measured, which is emitted by a chemiluminescent or fluorescent material included in each target area to be detected. The chemiluminescent material may be protein such as luciferase or non-protein such as luminol, and the fluorescent material may be fluorescein, rhodamine, acriflavin, or the like.

In the embodiments described below, methods of removing noise areas from microarray images (acquired by the above-described method) will be explained. The exposure time condition is defined as $2^{n-1}t_0$ (sec), where $t_0$ indicates the minimum exposure time, and n (variable) indicates the image number which corresponds to the number of imaging performance. Correction of microarray image using reference image

The reference image used in the embodiments is a background image of an acquired microarray image. More specifically, the background image as the reference image in the embodiments is obtained by subjecting the target microarray to image processing so as to generate an image which includes no spot. A detailed method of generating such a reference image is disclosed in Japanese Unexamined Patent Application, First Publication No. 2004-101354.

When using a fluorescent material as a mark (or marker), light for irradiating and exciting the fluorescent material is necessary. However, such light may have spatial unevenness, which is reflected on the reference image. Therefore, an image having no spatial unevenness (due to the irradiating and exciting light) can be obtained by correcting the microarray image by using the reference image.

Although the reference image is generated using the microarray image in the embodiments, this is not a limiting condition, and any image on which the background of the relevant microarray image is reflected can be used.

First embodiment

A method of extracting (or detecting) noise areas from the entire image so as to remove the noise areas at one time will be explained as the first embodiment.

First, a method of processing noise areas called "white noises" will be explained, where each white noise has an area smaller than a defined area of each target spot to be detected, and is brighter in comparison with the surroundings. Forming binary image used for white noise extraction

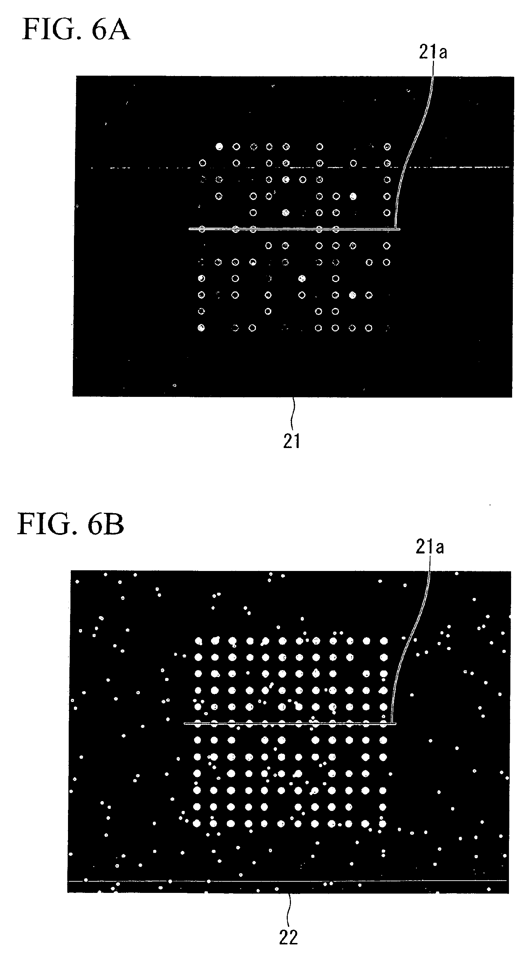

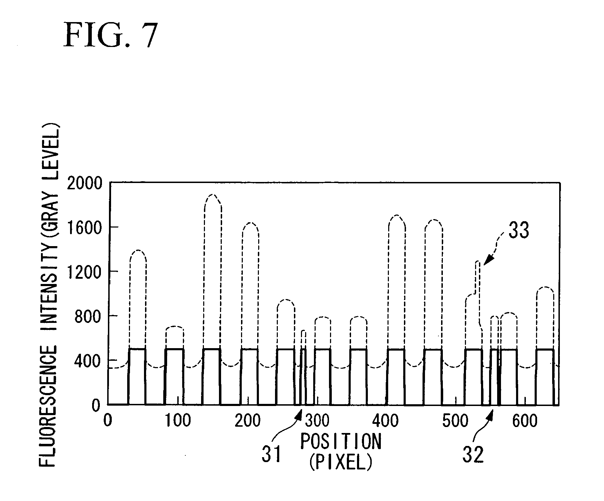

In order to extract white noises, a binary image is formed in the first step. For example, with respect to an acquired original image 21 as shown in Fig. 6A, a binary image 22 is obtained when assigning (i) "white" to each area having a gray level (corresponding to light intensity) of 500 or higher, and (ii) "black" to the other areas. Fig. 7 shows light-intensity profiles with respect to the spots on a line 21 a in the original image 21. In Fig. 7, the vertical axis indicates the gray level of each detected area, and horizontal axis indicates the position of the detected area. The broken line indicates the light-intensity profile of the relevant areas with respect to the acquired original image 21, and the solid line indicates the light-intensity profile of the same areas with respect to the binary image 22. In order to easily compare with the light-intensity profile of the acquired original image 21, in the light-intensity profile of the binary image 22, gray levels of 500 or higher are indicated by a gray level of 500, and the other gray levels are indicated by a gray level of zero.

Extraction of white noise

As described above, the white noise has an area smaller than the defined area of each spot, and is brighter than the surroundings. For example, in Fig. 7, each area smaller than the spot and having a gray level higher than or equal to 500 (as a threshold) is targeted. Accordingly, a first area 31 and a second area 32 are extracted as white noises.
Therefore, the spots to be detected can be clearly distinguished from white noises, by using a binary image.

Selection of image used for extraction of white noise

As described above, a plurality of images are acquired with different exposure times so as to image each target spot at an optimum exposure condition. Therefore, it is necessary to determine which of the images is used for forming the binary image and extracting the white noises.
More specifically, a value slightly larger than the maximum gray level of the reference image (which is generated by removing the spots from the original image) is used as the threshold for generating the binary image, and noise areas on each target image are detected using the binary image. Although a longer exposure time is advantageous, if the exposure time is too long, noise areas may not be recognized due to light emitted from the spots. Therefore, an image having an appropriate exposure condition should be selected.
In addition, it is necessary not to detect noise of the detector itself.
Therefore, in order to determine the image used for forming the binary image, first, it is determined whether the following condition is satisfied with respect to the image having the longest exposure time, among the plurality of images:

$$L_G = \frac{R_{max}}{2^{n_R - n}} + 5\,\sigma \leq 2^{B-3} \tag{1}$$

where $R_{max}$ relates to a gray-level histogram of the reference image, and indicates a gray level at which the accumulated number of pixels counted from the highest gray level does not exceed 0.5% of the total number of pixels; $n_R$ indicates the number of the image used for forming the reference image; $\sigma$ indicates the standard deviation with respect to the gray level of noise of pixels in the CCD camera; B indicates the number of bits for conversion, that is, the resolution for AD (analog-to-digital) conversion of the relevant CCD; and n is the number of the acquired image.
Therefore, $L_G$ is defined by (i) the gray level of the background part, and (ii) the noise part of the CCD camera as the detector, which are added together. Additionally, as the image having the longest exposure time is subjected to the above determination, n is the number of the final image.
When the computed $L_G$ is smaller than or equal to $2^{B-3}$, the present image is used for extracting the white noises.
When the formula (1) is not satisfied by the above conditions, n is successively decreased, and it is determined whether the formula (1) is satisfied with respect to each image from the final image number to the start image number, that is, from the image having the longest exposure time to the image having the shortest exposure time.
Accordingly, an image which has satisfied the formula (1) is indicated by:

$$I'_n(x, y) \tag{2}$$

which is used for extracting the white noises. If no image satisfies the relevant condition, the image having the smallest n, that is, the start image is selected as the image for extracting the white noises.

Formation of binary image

A binary image is formed as:

$$\overline{I}'(x, y) \tag{3}$$

from the selected image (2) by using the gray level $L_G$ as the threshold, and white noises are extracted using the binary image (3). Extraction of white noise from the selected image

Each white part in the binary image (3) is either the spot area or the white noise. As the defined area So of the spot area is predetermined, selection is performed in such a manner that in the binary image (3), each white part having an area of 50% or smaller of So is determined as a white noise, and the other white parts are determined as the spot areas. In accordance with this selection, white noise extraction is completed. The number of the extracted white noises is indicated by $m_G$.

In this process, if the number of the extracted white noises is 1000 or larger, a considerable long time may be required for the following noise processing. Therefore, when 1000 or more white noises have been extracted, the gray level $L_G$ as the threshold may be increased step by step, by 16 levels for each step, for forming the binary image, so that the gray level $L_G$ is set as a threshold by which 1000 or more white noises are not extracted.

In addition, a state in which no white noise is detected is possible in accordance with the gray level $L_G$ (which also includes $L_G$ having an increased binary level step by step, by 16 levels). In this case, the following white-noise removing process is not executed.

Expansion process of white noise

Next, as a preparatory process before processing the white noises extracted through the gray level $L_G$, they are subjected to an expansion (or dilation) process.

In the expansion process, each white part on the binary image is enlarged so as to make the surroundings thereof be also included in the white part, thereby expanding the surroundings and increasing the area of the white part while maintaining the form of the original white part as original as possible. The surroundings correspond to (i) four pixels when selecting adjacent pixels, each having a common side with respect to a target pixel in the original white part, or (ii) eight pixels when selecting adjacent pixels, each having a common corner with respect to the target pixel. In the above expansion process, either of the four pixels and the eight pixels may be used.

In accordance with the expansion process, errors with respect to boundary detection for noise areas can be removed, and thus in the relevant image, it is possible to completely remove influence of such errors with respect to the noise areas.

The k-th white noise on the binary image (3) is indicated by:

$$\overline{I}_k''(x, y) \tag{4}$$

and is subjected to the expansion process. The k-th white noise after the expansion process is indicated by:

$$\overline{I}_k''(x, y) \tag{5}$$

and is substituted for the corresponding white noise (4).

In this process, it is preferable to repeat the expansion approximately "$m_{Gd}$ times", which is computed by the following formula:

$$m_{Gd}=Roundup\left(\frac{\sqrt{w_0+\Delta^2 A_s^2}}{P_1}, 0\right)+m_{AS} \tag{6}$$

where $w_0$ indicates the minimum point-image radius, $\Delta$ indicates the absolute value of the amount of defocusing with respect to the relevant optical system, As indicates the numerical aperture (for detection) of the optical system, $P_1$ indicates the pixel pitch of the CCD camera, and $m_{AS}$ indicates the number of execution times with respect to smoothing of the microarray image. In addition, "Roundup" means making an integer by rounding up the relevant value.

That is, $m_{Gd}$ is defined in consideration of optical blurring, which depends on the minimum point-image radius (i.e., the minimum radius for being recognized as a point image) and defocusing, and also blurring due to the image smoothing process. When each noise area is expanded in consideration of such blurring, the white noises can be determined in consideration of influence of optical blurring.

The above process is applied to each k-th white noise (5) after the expansion process, that is, until k becomes $m_G$. After that, a process of removing the white noises is performed.

Removal of white noise

The removal of the white noises is performed by generating the following image:

$$I''_n(x, y) \tag{7}$$

by substituting the gray levels of both the k-th white noise (5) after the expansion and outside pixels adjacent thereto with the median of the gray levels of the adjacent outside pixels.

In accordance with the above process, light intensity of each white-noise part is converted into a light intensity similar to that of the surroundings, thereby removing each white noise.

Such an operation of removing the white noise is also applied to all of the images used for the relevant analysis. Therefore, with given variables n (the number of the relevant acquired image) and k (the number of the relevant white noise), the above removal process is applied to each k-th white noise (5) (after the expansion) in the n-th image. Accordingly, all white-noise areas, which have been extracted from the one selected image, are removed from all images.
Selection of image used for extraction of black noise

Next, a method of processing noise areas (called "black noises") will be explained, each of which has an area smaller than the defined area of each spot to be detected, and is darker than the surroundings.

In order to extract black noises, a binary image is generated, similar to the white-noise processing. As a plurality of images have been acquired, it is determined in the first step which of them should be used for extracting the black noises.

In this case, generation of the binary image is performed using a threshold which is slightly smaller than the maximum light intensity of the reference image. In addition, it is important not to detect noise of the detector itself.

First, it is determined whether the following condition is satisfied with respect to the image having the shortest exposure time, among the plurality of images:

$$L_G=\frac{R_{max}}{2^{n_R-n}}-5\sigma \geq 2^{B-4} \tag{8}$$

where each parameter in the formula (8) is identical to those used in the formula (1). That is, an image which satisfies $L_G \geq 2^{B-4}$ is selected.

If the formula (8) is not satisfied by the above conditions, n is successively increased, and it is determined whether the formula (8) is satisfied with respect to each image from the start image number to the final image number, that is, from the image having the shortest exposure time to the image having the longest exposure time.

Accordingly, an image which satisfies the formula (8) is indicated by:

$$I'_n(x, y) \qquad\qquad (9)$$

which is used for extracting the black noises. If no image satisfies the condition of formula (8), the image having the largest n, that is, the final image is selected as the image for extracting the black noises.

Formation of binary image

A binary image is formed as:

$$\overline{I}'(x, y) \qquad\qquad (10)$$

from the selected image (9) by using the gray level $L_G$ as the threshold, and the black noises are extracted using the binary image (10).

Extraction of black noise from the selected image

Each black part in the binary image (10) is either the spot area or the black noise. As the defined area So of the spot area is predetermined, selection is performed in such a manner that in the binary image (10), each black part having an area of 50% or smaller with respect to So is determined as a black noise, and the other black parts are determined as the spot areas. In accordance with the selection, extraction of black noises to be processed is completed. The number of the extracted black noises is indicated by $m_G$.

In this process, if the number of the extracted black noises is 1000 or larger, a considerably long time may be required for the following noise processing. Therefore, when 1000 or more black noises have been extracted, the gray level $L_G$ as the threshold may be decreased step by step, by 16 levels for each step, for forming the binary image, so that the gray level LG is set as a threshold by which 1000 or more black noises are not extracted.

In addition, a state in which no black noise is detected is possible in accordance with the gray level $L_G$ (which also includes $L_G$ having a decreased binary level step by step, by 16 levels). In this case, the following black noise removing process is not executed.

Contraction process of black noise

Next, as a preparatory process before processing the black noises extracted through the gray level $L_G$, they are subjected to a contraction (or erosion) process.

In the contraction process, the area of each black part on the binary image is reduced by making the surroundings thereof be white while maintaining the form of the original black part as original as possible. The surroundings correspond to (i) four pixels when selecting adjacent pixels, each having a common side with respect to a target pixel in the original black part, or (ii) eight pixels when selecting adjacent pixels, each having a common corner with respect to the target pixel. In the above contraction process, either of the four pixels and the eight pixels may be used.

In accordance with the contraction process, errors with respect to boundary detection for noise areas can be removed, and thus it is possible to completely remove the influence of such errors with respect to the noise areas.

The k-th black noise on the binary image (10) is indicated by:

$$\overline{I}''_k(x, y) \qquad\qquad (11)$$

and is subjected to the contraction process. The black noise after the contraction process is indicated by:

$$\overline{I}_k''(x, y) \qquad\qquad (12)$$

and is substituted for the corresponding black noise (11).

In this process, it is preferable to repeat the contraction "$m_{Gd}$ times", which is computed by the above formula (6). The reason for this is similar to that with respect to the expansion process of the white noise. Accordingly, black noises can be determined in consideration of the influence of optical blurring.

The above process is applied to each k-th black noise (5) after the contraction process, that is, until k becomes $m_G$. After that, a process of removing the black noises is performed.

Removal of black noise

The removal of the black noises is performed by generating the following image:

$$I_n''(x, y) \qquad\qquad (13)$$

by substituting the gray levels of both the k-th black noise (12) after the contraction and outside pixels adjacent thereto with the median of the gray levels of the adjacent outside pixels.

In accordance with the above process, the gray level of each black noise part is converted into a gray level similar to that of the surroundings. Such a process is applied to all black noises after the contraction, thereby removing all black noises from one image.

With respect to the removal of the black noise, instead of the above contraction process, an expansion process similar to that applied to the white noise may be performed.

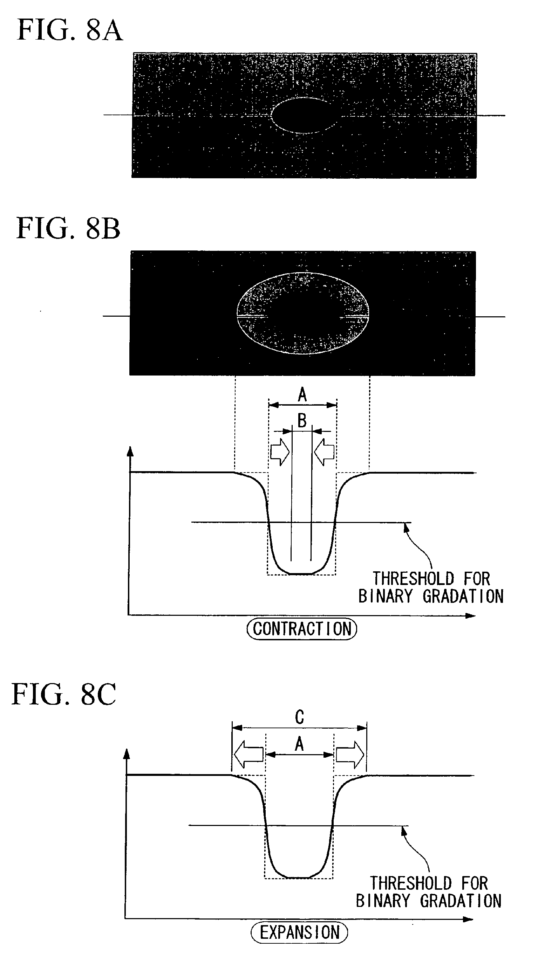

Fig. 8A shows the actual body of a black noise, and Fig. 8B is an acquired image thereof, and also shows the principle of the contraction process by using a gray-level (i.e., light intensity) chart. Fig. 8C shows the principle of the expansion process also by using a gray-level (light intensity) chart.

As shown in Fig. 8B, in the contraction process, the black-noise area is narrowed from area A to area B. Therefore, in accordance with this process, data of light, which has been enlarged in the vicinity of the relevant boundary due to optical blurring, is made useful.

As shown in Fig. 8C, in the expansion process, the black-noise area is enlarged from area A to area C, so that the black-noise area is enlarged. However, when substituting the gray level of this area with the median of the gray levels of the outside pixels adjacent thereto, the black noises can also be removed, thereby obtaining similar effects.

Such an operation of removing the black noises is also applied to all of the images used for the relevant analysis. Therefore, with given variables n (the number of the relevant acquired image) and k (the number of the relevant black noise), the above removal process is applied to each k-th black noise (12) after the contraction. Accordingly, all black noise areas, which have been extracted from the one selected image, are removed from all images.

In accordance with the above processes, black noises included in all acquired images have been removed, and all noise-removing processes have been completed.

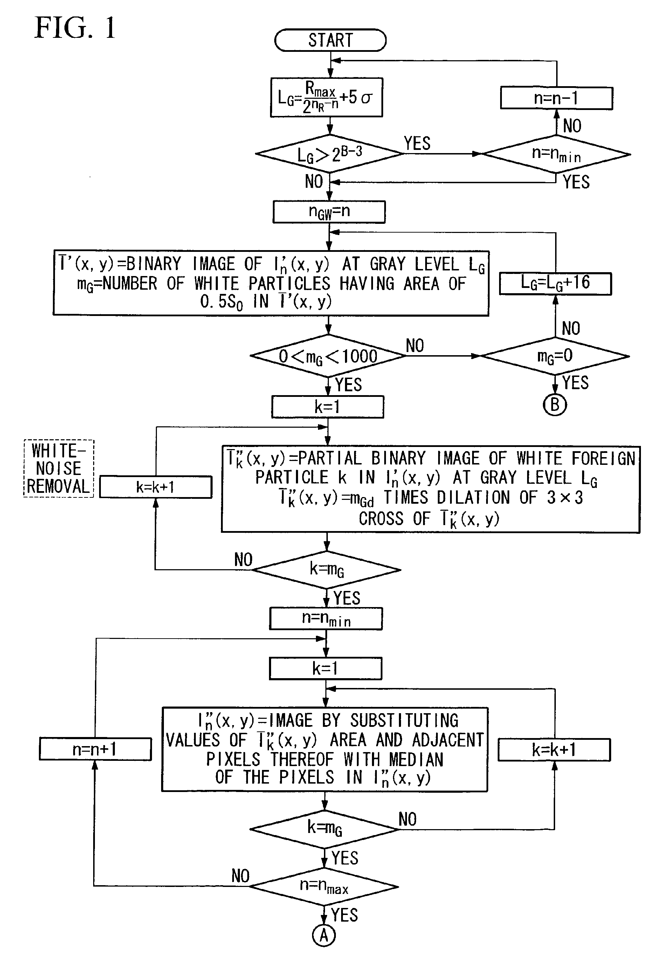

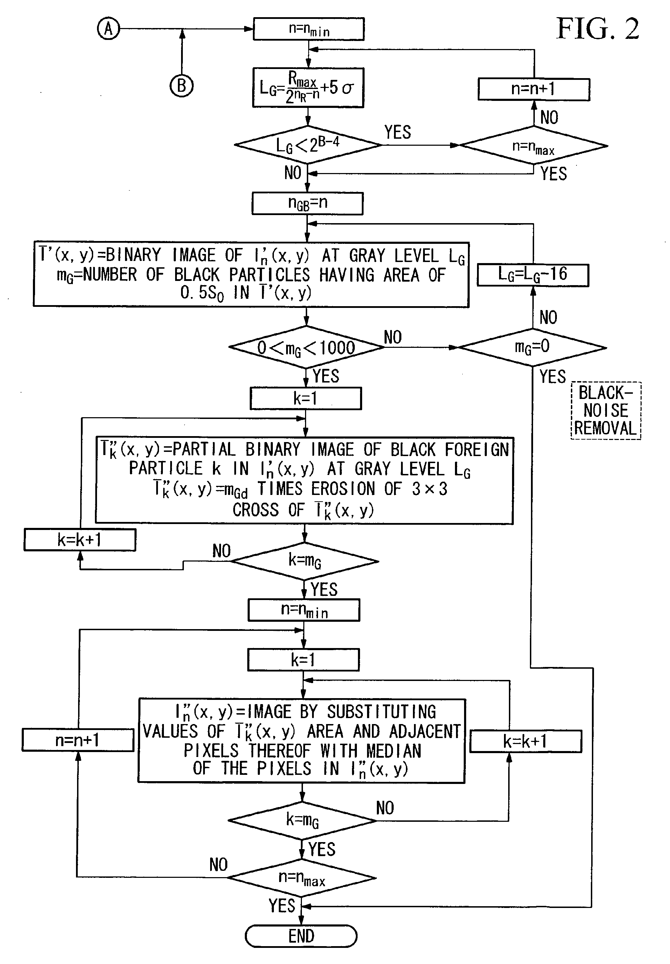

Figs. 1 and 2 are flowcharts showing the noise removing method of the first embodiment (the contraction process is employed for the black noise).

Second embodiment

In the present embodiment, the threshold is variable and set for each spot area on a microarray so as to extract noise areas, and the noise removing process is repeated for each noise extraction.

Also in the present embodiment, as the influence of black noises on the measurement result is very small, the noise removing process is applied to only white noises so as to reduce the processing time.

In the noise removing method of the first embodiment, each noise area is separated from the spot areas, and only noises extracted using a threshold can be removed. Therefore, for example, it is impossible to extract a noise area on a spot (see the third white-noise area 33), or an area to be extracted as a noise area by a threshold different from the set threshold. Accordingly, in the present embodiment, a method of further precisely removing white noises is shown, which may affect the relevant analysis with a high probability.

More specifically, in the present embodiment, generally, (i) with respect to each spot area on a microarray, an optimum image for performing the relevant analysis is selected from among a plurality of acquired images, (ii) with respect to noise areas extracted from the image selected for each spot, each area which is not the spot and is sufficiently smaller than the spot is extracted, and (iii) when it is determined that the extracted area has a light intensity higher than that of the noise with respect to optical detection of the relevant detector, the area is removed as a white noise.

Selection of image used for extracting white noise

First, with respect to a target spot area on a microarray, an optimum image used for the relevant analysis is extracted from among a plurality of images. That is, with respect to a spot area for the analysis, a rectangular image as shown in Fig. 10 is defined by:

$$\Gamma_{i,j,n} \qquad\qquad (14)$$

and the maximum gray level in this image is indicated by $I_{max}$. When assigning an x-y plane to the (entire) original image, i indicates the spot position in the x direction, j indicates the spot position in the y direction, and n indicates the number of the relevant acquired image. In addition, the maximum value of i is indicated by $m_x$, and the maximum value of j is indicated by my.

For the relevant spot area, it is determined whether the following condition is satisfied with respect to an image (among a plurality of images) having the shortest exposure time (i.e., the image having the smallest n):

$$I_{max} > 2^{B-2} \qquad\qquad (15)$$

where B indicates the number of bits for the AD conversion. If the condition is satisfied, the present n is determined as the number of the acquired image used for the relevant analysis.

If the condition is not satisfied, n is sequentially increased until the condition is satisfied, so as to determine the image used for the analysis (i.e., an image selection step). If the formula (15) is not satisfied even for the maximum n, then it is determined that the image having the largest n is used for the analysis, and this n is defined as n'.

Determination of whether white noise in selected image should be removed

Next, it is necessary to examine whether white noises should be removed from the image which has satisfied the formula (15). Therefore, it is determined whether the values computed by the following formulas (16) and (17) satisfy the formula (18), by using the number n (= n') of the acquired image used for the analysis (i.e., a noise removal determination step):

$$L_{Gn} = \frac{R_{max}}{2^{n_R-n}} - 2^{n-1} t_0 I_{MB} + 2\sigma \qquad\qquad (16)$$

$$\Gamma_L = I_{max} - 2\sigma - \Gamma_\alpha \qquad\qquad (17)$$

$$\Gamma_L > L_{Gn} \qquad\qquad (18)$$

Therefore, white-noise removal is performed only when the formula (18) is satisfied. In the above formulas,

$R_{max}$ relates to a gray-level histogram of the reference image, and indicates a gray level at which the accumulated number of pixels counted from the highest gray level does not exceed 0.5% of the total number of pixels; $n_R$ indicates the number of the image used for forming the reference image; to indicates the minimum exposure time; $I_{MB}$ indicates a basic background level; $\sigma$ indicates a standard deviation with respect to the gray level of the CCD camera itself; and $\Gamma_\alpha$ is a variable having an initial value of 0. Here, the basic background level is a value obtained by dividing a gray level, at which the accumulated number of pixels counted from the lowest gray level does not exceed 0.5% of the total number of pixels in the target (i.e., selected) image, by the exposure time when the target image is acquired.

Therefore, the above formula (16) indicates a background value which includes a dispersion with respect to optical detection by the optical detector (i.e., the CCD camera), and the above formula (17) indicates a light intensity of the spot and white noises in consideration of the dispersion with respect to the optical detection by the optical detector. With respect to the (selected) image to be analyzed, the spot and white noises are searched for while decreasing the threshold step by step (by $\Gamma_\alpha$ for each step), and determination with respect to the formula (18) is performed for each search. The white-noise removal is executed when the formula (18) has been satisfied, that is, only when it has been determined that the spot and the white noises are not buried under the background level.

Generation of binary image

When it has been determined that the white noise should be removed, the following binary image of the image (14) is formed at the gray level $\Gamma_\alpha$ (i.e., as the threshold for binarization):

$$\overline{\Gamma}_{i,j} \qquad (19)$$

(i.e., a binary image forming step). As the area of each white noise is sufficiently smaller than that of the target spot to be detected, the condition regarded as the white noise is determined as $0.2S_0$ or smaller, where So is the defined area of the target spot. With respect to the binary image (19), a binary particle image with respect to "$0.2S_0$ or smaller" is defined as the following formula (20):

$$\overline{\Gamma}_{i,j} \qquad (20)$$

and it is substituted for the binary image (19).

Expansion of white noise and determination of whether the white noise should be removed

Each white noise extracted as described above should be removed only when the light intensity thereof exceeds a dispersion with respect to the optical detector. Therefore, it is determined whether the removal is necessary.

In the binary image (20), all (one or more) of the white noises are subjected to an expansion process (i.e., an expansion step). This expansion process is equal to that explained in the first embodiment, and a detailed explanation thereof is omitted here. Additionally, it is preferable to repeat the expansion process approximately "$m_{Gd}$ times", which is computed by the following formula:

$$m_{Gd} = \frac{\sqrt{w_0 + \Delta^2 A_S^2}}{P_I} + m_{As} \qquad (21)$$

where $w_0$ indicates the minimum point-image radius (i.e., the minimum radius for being recognized as a point image), $\Delta$ indicates the absolute value of the amount of defocusing with respect to the relevant optical system, $A_s$ indicates the numerical aperture (for detection) of the optical system, $P_1$ indicates the pixel pitch of the CCD camera, and $m_{AS}$ indicates the number of execution times with respect to smoothing of the microarray image. When executing the expansion process approximately $m_{Gd}$ times (computed by the formula (21)), white noises which should be removed can be determined also in consideration of optical blurring of each white-noise part.

Next, with respect to outside pixels adjacent to the expanded area, the median of the pixel values in $\Gamma_{i,j,n}$ is indicated by $M_n$. When the binary particle image (20) with respect to the white noise satisfies the following formula:

$$\Gamma_L - M_n > 2\sigma \qquad (22)$$

it is determined that the white noises should be removed.

In accordance with the above determination, noise removal processing is executed after it is determined whether the light intensity of each white noise, which is extracted from $\Gamma_{i,j,n}$, is greater than or equal to a noise level appropriate for removal.

Removal of white noise

When one or more white noises to be removed have been extracted through the above processes, a process of removing them is executed (i.e., a noise removing step). In this removal process, the following image substitution is performed with respect to the image area $\Gamma_{i,j,n}$ which includes each white noise to be removed:

$$\Gamma_{i,j,n} \rightarrow \Gamma_{i,j,n} - 2\sigma \qquad (23)$$

In this process, each area, which has been extracted as an area including a white noise, is darkened by $2\sigma$, so that the light intensity of each white-noise area can approach the light intensity of the surroundings thereof.

When the image, to which the noise processing has applied, is not the final image (i.e., $n \# n_{max}$), the substitution (23) is repeated while increasing n one by one, until the final image is processed (i.e., $n = n_{max}$). This is because all images having an exposure time longer than that of the image which was extracted first are processed in consideration that the target image to be analyzed, which has first satisfied the formula (15), may be changed due to the noise area processing, that is, after all noise-related processes are performed.

Repetition of white-noise removal

When n becomes $n_{max}$, and the process of removing white noises on the binary particle image (20) has been completed, then the threshold with respect to the binary image is decreased by $2\sigma$ (gray level), and the above operation is repeated.

Then a similar operation is repeatedly performed.

When repeating the extraction of the optimum image for the relevant analysis, and the extraction and removal of white noises while decreasing the threshold for the binary image step by step, by $2\sigma$ (gray level) for each step, the threshold reaches a level at which the formula (18) is not satisfied. This means that the white-noise removal has proceeded to the noise level of the optical detector, and that the noise-area processing with respect to the target spot has been completed.

In accordance with the above processes, the white-noise removal of the target spot has been completed, and an image $\Gamma_{i,j,h}$ is obtained, in which all white noises have been removed.

Here, a final image (such as the image 14 shown in Fig. 5D) in which the relevant spot areas are collected is desired. Therefore, with given $I_{HM}(x', y')$ as the collected image, the following formation is performed:

$$I_{HM}(x', y') \leftarrow I_{HM}(x', y') + \Gamma_{i,j,n} \qquad (24)$$

In accordance with the above processes, all noise removal processes with respect to the target spot have been completed. Therefore, the above-described noise removal should be applied to all spots.

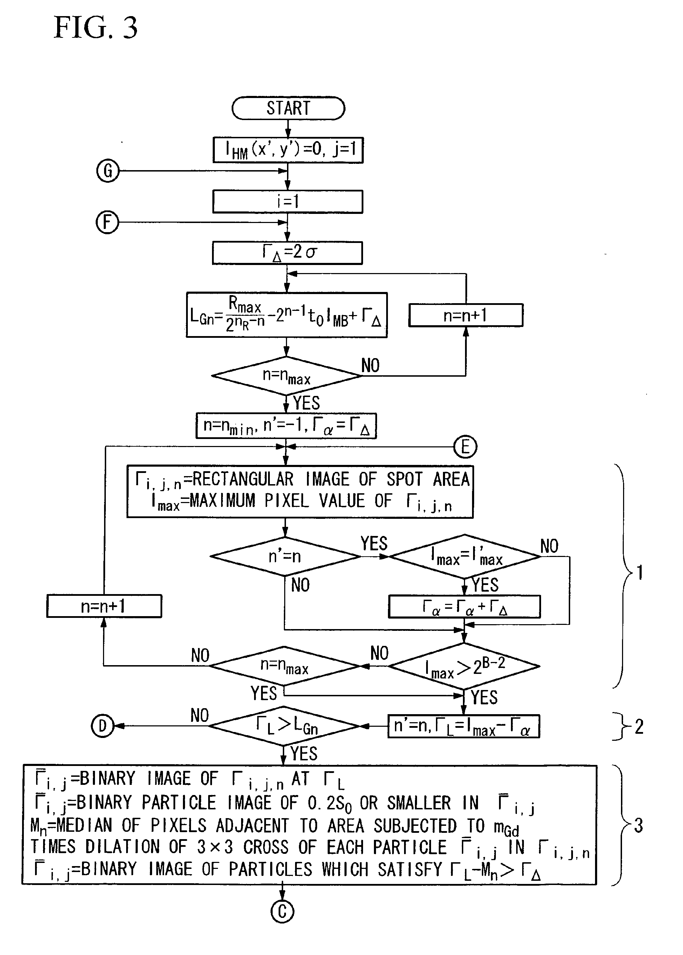

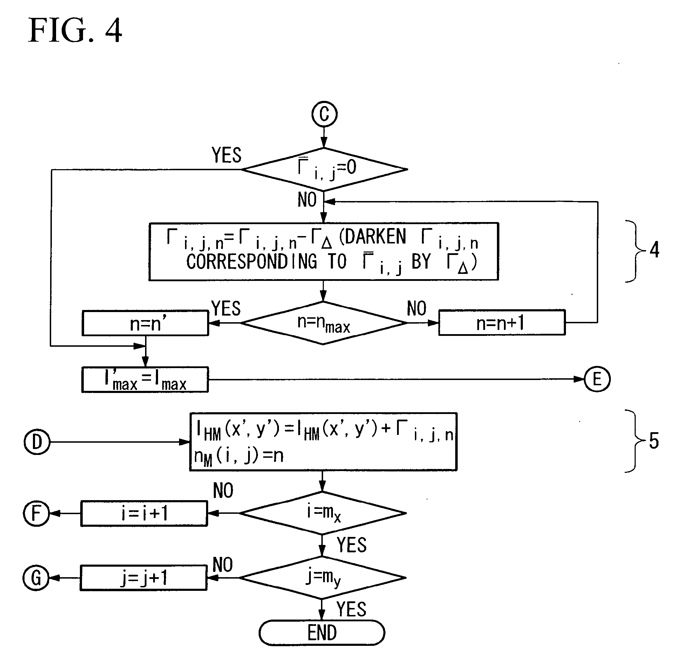

Figs. 3 and 4 are flowcharts showing the noise removing method of the second embodiment.

As described above, only the white-noise removal is performed in the present embodiment. However, similar to the first embodiment, black-noise removal may also be performed when, for example, it is unnecessary to consider the processing time.

Third embodiment

Below, effects obtained by a combination as an application between the two noise-processing methods (shown in the above two embodiments) will be explained.

The first embodiment has explained a method of extracting noise areas from the entire image so as to remove the noise areas simultaneously. The second embodiment has explained a method of extracting noise areas for each spot on a microarray while assigning a specific threshold to each spot, and performing the noise removal for each noise extraction at each threshold.

In accordance with the noise removal method of the first embodiment, each noise area is separated from the relevant spot area, and noises extracted through a fixed threshold are removed. As the noise areas which can be extracted from the entire image by using a single threshold are removed in this method, high-speed processing can be executed. On the other hand, in accordance with the noise removal method of the second embodiment, the threshold is set for each spot so as to remove noise areas, and noise processing is repeated until no noise area is extracted, thereby performing precise noise-area removal.

That is, the noise removal method explained in the first embodiment is appropriate for high-speed processing, while the noise removal method explained in the second embodiment is appropriate for precise processing. Therefore, with respect to the noise removal, high-speed and highly accurate noise-area removal can be performed by processing the noise areas through the method of the first embodiment, and then removing the noises through the method of the second embodiment.

Light intensity measurement

In accordance with the above noise-area processing, a microarray image including no noise area can be obtained. With respect to the obtained image, the light intensity of each spot area may be measured by a method disclosed by Japanese Unexamined Patent Application, First Publication No. 2002-257730.

Light intensity measurement system

The above embodiments employ a light intensity measurement system using a CCD as the optical detector. However, the present invention is not limited to this form, and can be applied to a system which employs a CMD (charge modulation device), PMT (photomultiplier), PD (photodiode), or the like. For example, the present invention may be applied to a system employing a commercially available scanning microscope, which includes a laser light source and a PMT as the optical detector.

As described above, in accordance with the light intensity measurement method of the present invention, noise on the microarray can be removed with high accuracy. Therefore, it is possible to more precisely detect a biogenic substance or the like, and a series of analysis steps can be automatically performed, thereby providing high reproducibility, and performing the relevant analysis with high efficiency.

INDUSTRIAL APPLICABILITY

The present invention provides a method for detecting a biogenic substance or the like with high accuracy, and it is possible to efficiently and precisely determine the state of appearance of a gene, presence or absence of a specific gene on a genome, or presence or absence of a mutation in a gene. Therefore, the present invention is very effective in the medical industry, or the like.

**Claims**

1. A light intensity measurement method of acquiring an image of a subject for detection, in which a plurality of target areas to be detected, each having a predetermined area, are arranged, and of measuring light intensity of each target area by analyzing the acquired image, wherein the method comprises the steps of:

   extracting each area, which is smaller than the predetermined area, as a noise area, from among areas extracted from the acquired image based on light intensity thereof; and
   removing the noise area from the image.

2. The light intensity measurement method in accordance with Claim 1, wherein the target areas include a chemiluminescent material.

3. The light intensity measurement method in accordance with Claim 1, wherein the target areas include a fluorescent material.

4. The light intensity measurement method in accordance with Claim 1, wherein a plurality of images of the subject are acquired, and for each acquired image, each area, which is smaller than the predetermined area, is extracted as a noise area, and the noise area is removed.

5. The light intensity measurement method in accordance with Claim 4, wherein a binary image is formed based on the acquired image, and the noise area is extracted from the binary image.

6. The light intensity measurement method in accordance with Claim 5, wherein in the binary image, among areas which are smaller than the predetermined area, each area which has a light intensity higher than that of the surroundings thereof is determined as the noise area.

7. The light intensity measurement method in accordance with Claim 5, wherein in the binary image, among areas which are smaller than the predetermined area, each area which has a light intensity lower than that of the surroundings thereof is determined as the noise area.

8. The light intensity measurement method in accordance with Claim 4, wherein:

   the noise area is extracted using one selected image among the plurality of images; and
   based on a result of the extraction, noise-area extraction and removal of each acquired image is performed.

9. The light intensity measurement method in accordance with Claim 4, wherein the noise area has an area of 50% or smaller of the predetermined area.

10. The light intensity measurement method in accordance with Claim 4, wherein the noise-area extraction is performed in such a manner that the number of the noise areas is smaller than 1000.

11. The light intensity measurement method in accordance with Claim 4, wherein the noise area is expanded by a specific amount, and then removed.

12. The light intensity measurement method in accordance with Claim 4, wherein the noise area is contracted by a specific amount, and then removed.

13. The light intensity measurement method in accordance with Claim 11, wherein after the expansion, the light intensity of the noise area is substituted with a light intensity equivalent to the median of light intensity of outside pixels adjacent to the noise area.

14. The light intensity measurement method in accordance with Claim 12, wherein after the contraction, the light intensity of the noise area is substituted with a light intensity equivalent to the median of light intensities of outside pixels adjacent to the noise area.

15. The light intensity measurement method in accordance with Claim 1, wherein for each partial area which includes each target area in the acquired image, each area which is smaller than the predetermined area is extracted as a noise area, and is removed.

16. The light intensity measurement method in accordance with Claim 15, wherein a binary image is formed for each partial area which includes each target area in the acquired image, and the noise area is extracted using the binary image.

17. The light intensity measurement method in accordance with Claim 16, wherein among areas in the binary image, which are smaller than the predetermined area, each area having a light intensity higher than that of the surroundings is determined as the noise area.

**18.** The light intensity measurement method in accordance with Claim 17, wherein a plurality of images of the subject are acquired, and the image used for extracting the noise area is selected from among the plurality of the images.

**19.** The light intensity measurement method in accordance with Claim 18, wherein the image used for extracting the noise area is an image which has a maximum light intensity higher than a value obtained by multiplying 2 by 2 a number of times which is obtained by subtracting 2 from the number of bits with respect to AD conversion of the optical detector.

**20.** The light intensity measurement method in accordance with Claim 15, wherein the noise area has an area smaller than or equal to a value obtained by multiplying the predetermined area by 0.2.

**21.** The light intensity measurement method in accordance with Claim 15, wherein the noise area is expanded by a specific amount, and then removed.

**22.** The light intensity measurement method in accordance with Claim 21, wherein after the expansion, the median of light intensities of outside pixels adjacent to the expanded area is computed.

**23.** The light intensity measurement method in accordance with Claim 22, wherein:

a binary image is formed for each partial area which includes each target area in the acquired image; and
the noise area satisfies a condition that a difference between a threshold of light intensity used for forming the binary image and the median of the light intensities of the outside pixels is larger than a value obtained by doubling a standard deviation with respect to pixel noise of the optical detector used for acquiring the image.

**24.** The light intensity measurement method in accordance with Claim 15, wherein the noise area is removed by subtracting a value from the light intensity of the noise area, where the value is obtained by doubling a standard deviation with respect to pixel noise of the optical detector used for acquiring the image.

**25.** The light intensity measurement method in accordance with Claim 15, wherein in each partial area, each area which is smaller than the predetermined area is extracted as the noise area based on a predetermined threshold with respect to light intensity.

**26.** The light intensity measurement method in accordance with Claim 25, wherein the noise extraction for each partial area based on the predetermined threshold with respect to light intensity is repeated a plurality of times while varying the threshold for each partial area.

**27.** The light intensity measurement method in accordance with Claim 1, wherein:

a plurality of images of the subject are acquired, and for each acquired image, each area, which is smaller than the predetermined area, is extracted as a noise area, and the noise area is removed; and
for each partial area which includes each target area in each image from which the noise area has been removed, each area which is smaller than the predetermined area is extracted as a noise area based on a predetermined threshold with respect to light intensity, and the noise area is removed.

**28.** The light intensity measurement method in accordance with Claim 27, wherein the noise extraction for each partial area based on the predetermined threshold with respect to light intensity is repeated a plurality of times while varying the threshold for each partial area.

**29.** A light intensity measurement system for measuring light intensity of a subject for detection, in which a plurality of target areas to be detected, each having a predetermined area, are arranged, the system comprising:

a light emitting device for emitting light to the subject;
an image acquiring device for acquiring an image of the subject to which the light is emitted;
a storage device for storing the acquired image;
an extracting device for extracting each area, which has an area smaller than the predetermined area, as a noise area from the stored image; and
an image processing device for removing the noise area from the stored image.

**30.** A light intensity measurement system in accordance with Claim 29. wherein:

the extracting device extracts the noise area for each stored image; and
the image processing device removes the noise area for each stored image.

**31.** A light intensity measurement system in accordance with Claim 29. wherein:

the extracting device extracts the noise area for each partial area which includes each target area in the stored image; and
the image processing device removes the noise area also for each partial area.

# FIG. 1

```
                              START

          L_G = (R_max / 2^{n_R-n}) + 5σ          n=n-1
                                                    ↑ NO
                    L_G > 2^{B-3}   YES      n=n_min
                         NO                    YES

                         n_GW = n

    T̄'(x,y)=BINARY IMAGE OF I'_n(x,y) AT GRAY LEVEL L_G
    m_G=NUMBER OF WHITE PARTICLES HAVING AREA OF      L_G=L_G+16
              0.5S_0 IN T̄'(x,y)
                                                        NO
                   0 < m_G < 1000   NO        m_G=0
                         YES                   YES
                                                (B)
                         k=1

 WHITE-     T̄''_k(x,y)=PARTIAL BINARY IMAGE OF WHITE FOREIGN
 NOISE           PARTICLE k IN I'_n(x,y) AT GRAY LEVEL L_G
 REMOVAL    k=k+1  T̄''_k(x,y)=m_Gd TIMES DILATION OF 3×3
                            CROSS OF T̄''_k(x,y)

                   NO        k=m_G
                             YES
                         n=n_min

                         k=1

            I''_n(x,y)=IMAGE BY SUBSTITUTING
 n=n+1    VALUES OF T̄''_k(x,y) AREA AND ADJACENT      k=k+1
          PIXELS THEREOF WITH MEDIAN
            OF THE PIXELS IN I''_n(x,y)

                         k=m_G   NO
                         YES
                 NO     n=n_max
                         YES
                         (A)
```

FIG. 2

Ⓐ → n=n_min

Ⓑ

$L_G = \frac{R_{max}}{2^{n_R-n}} + 5\sigma$

n=n+1

$L_G < 2^{B-4}$ — YES → n=n_max — NO ↑

NO ↓ ← YES (n=n_max)

n_GB=n

T'(x, y)=BINARY IMAGE OF I'_n(x, y) AT GRAY LEVEL L_G
m_G=NUMBER OF BLACK PARTICLES HAVING AREA OF
0.5S_0 IN T'(x, y)

$L_G = L_G - 16$

NO ↑

$0 < m_G < 1000$ — NO → m_G=0

YES ↓          YES ↓

k=1

BLACK-
NOISE
REMOVAL

T''_k(x, y)=PARTIAL BINARY IMAGE OF BLACK FOREIGN
PARTICLE k IN I'_n(x, y) AT GRAY LEVEL L_G
T''_k(x, y)=m_Gd TIMES EROSION OF 3×3
CROSS OF T''_k(x, y)

k=k+1 ← NO — k=m_G

YES ↓

n=n_min

k=1

I''_n(x, y)=IMAGE BY SUBSTITUTING
VALUES OF T''_k(x, y) AREA AND ADJACENT
PIXELS THEREOF WITH MEDIAN
OF THE PIXELS IN I''_n(x, y)

n=n+1

k=k+1

k=m_G — NO →

YES ↓

n=n_max — NO →

YES ↓

END

# FIG. 3

START

$I_{HM}(x', y')=0, j=1$

Ⓖ

$i=1$

Ⓕ

$\Gamma_\Delta = 2\sigma$

$L_{Gn} = \dfrac{R_{max}}{2^{n_R-n}} - 2^{n-1} t_0 I_{MB} + \Gamma_\Delta$

$n = n+1$

$n = n_{max}$  — NO

YES

$n = n_{min}, n' = -1, \Gamma_\alpha = \Gamma_\Delta$

Ⓔ

$\Gamma_{i,j,n} = $ RECTANGULAR IMAGE OF SPOT AREA
$I_{max} = $ MAXIMUM PIXEL VALUE OF $\Gamma_{i,j,n}$

$n' = n$ — YES — $I_{max} = I'_{max}$ — NO

NO

YES

$\Gamma_\alpha = \Gamma_\alpha + \Gamma_\Delta$

$n = n+1$

$n = n_{max}$ — NO — $I_{max} > 2^{B-2}$

NO

YES

YES

$n' = n, \Gamma_L = I_{max} - \Gamma_\alpha$

$\Gamma_L > L_{Gn}$ — NO — Ⓓ

YES

$\Gamma_{i,j} = $ BINARY IMAGE OF $\Gamma_{i,j,n}$ AT $\Gamma_L$
$\bar{\Gamma}_{i,j} = $ BINARY PARTICLE IMAGE OF $0.2S_0$ OR SMALLER IN $\Gamma_{i,j}$
$M_n = $ MEDIAN OF PIXELS ADJACENT TO AREA SUBJECTED TO $m_{Gd}$
TIMES DILATION OF $3 \times 3$ CROSS OF EACH PARTICLE $\bar{\Gamma}_{i,j}$ IN $\Gamma_{i,j,n}$
$\bar{\Gamma}_{i,j} = $ BINARY IMAGE OF PARTICLES WHICH SATISFY $\Gamma_L - M_n > \Gamma_\Delta$

1

2

3

Ⓒ

# FIG. 4

Ⓒ

YES ← $\bar{\Gamma}_{i,j}=0$

NO

$\Gamma_{i,j,n}=\Gamma_{i,j,n}-\Gamma_\Delta$ (DARKEN $\Gamma_{i,j,n}$ CORRESPONDING TO $\bar{\Gamma}_{i,j}$ BY $\Gamma_\Delta$)

} 4

YES ← $n=n_{max}$ → NO

$n=n'$ $\qquad$ $n=n+1$

$I'_{max}=I_{max}$ $\longrightarrow$ Ⓔ

Ⓓ $\longrightarrow$ $I_{HM}(x',y')=I_{HM}(x',y')+\Gamma_{i,j,n}$
$n_M(i,j)=n$

} 5

NO ← $i=m_x$

Ⓕ ← $i=i+1$

YES

NO ← $j=m_y$

Ⓖ ← $j=j+1$

YES

END

FIG. 5A

FIG. 5B

## FIG. 5C

17a  17b

13

## FIG. 5D

14

FIG. 6A

21a

21

FIG. 6B

21a

22

# FIG. 7

FIG. 8A

FIG. 8B

THRESHOLD FOR
BINARY GRADATION

(CONTRACTION)

FIG. 8C

THRESHOLD FOR
BINARY GRADATION

(EXPANSION)

# FIG. 9

# FIG. 10

Imax

<table>
<tr><td colspan="2" align="center">**INTERNATIONAL SEARCH REPORT**</td><td>International application No.<br>PCT/JP2006/314870</td></tr>
</table>

| A. CLASSIFICATION OF SUBJECT MATTER |
|---|
| $G01N21/64(2006.01)i$, $G01N21/76(2006.01)i$ |

According to International Patent Classification (IPC) or to both national classification and IPC

| B. FIELDS SEARCHED |
|---|

Minimum documentation searched (classification system followed by classification symbols)
$G01N21/00-G01N21/01G01N21/17-G01N21/83$

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JDream2)

| C. DOCUMENTS CONSIDERED TO BE RELEVANT | | |
|---|---|---|
| Category* | Citation of document, with indication, where appropriate, of the relevant passages | Relevant to claim No. |
| P,X | JP 2005-345339 A (Matsushita Electric Industrial Co., Ltd.), 15 December, 2005 (15.12.05), Par. Nos. [0028], [0046]; Fig. 1 (Family: none) | 1,3,5,29,30 |
| Y | JP 2002-350350 A (Olympus Optical Co., Ltd.), 04 December, 2002 (04.12.02), Full text; Figs. 1, 2, 4 & US 2002/0168665 A1 & EP 1243925 A3 | 1-12,15-21, 25,27,29-31 |
| Y | JP 2004-163201 A (Matsushita Electric Industrial Co., Ltd.), 10 June, 2004 (10.06.04), Par. Nos. [0025] to [0028] (Family: none) | 1-12,15-21, 25,27,29-31 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 28 September, 2006 (28.09.06) | Date of mailing of the international search report 10 October, 2006 (10.10.06) |
|---|---|
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/314870

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-504627 A  (Chromavision  Medical Systems, Inc.), 04 February, 2003 (04.02.03), Par. No. [0010] & US 2004/066960 A1    & EP 1203343 A & WO 2001/004828 A1 | 1-12,15-21, 25,27,29-31 |
| Y | JP 2002-257730 A  (Olympus Optical Co., Ltd.), 11 September, 2002 (11.09.02), Claim 2; Par. No. [0054] & US 2004/0001196 A1    & EP 1347285 A1 & WO 2002/057756 A1 | 11,21 |
| Y | JP 6-94595 A  (Mitsui Mining & Smelting Co., Ltd.), 05 April, 1994 (05.04.94), Claim 1 & US 5428655 A | 12 |

Form PCT/ISA/210 (continuation of second sheet) (April 2005)

**EP 1 912 060 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005220358 A
- JP 2000121559 A
- JP 2002181709 A
- JP 2002257730 A
- JP 2004101354 A